(19) Europäisches Patentamt
European Patent Office
Office européen des brevets

(11) **EP 4 145 210 A2**

(12) **EUROPEAN PATENT APPLICATION**

(43) Date of publication:
**08.03.2023   Bulletin 2023/10**

(21) Application number: **22193089.4**

(22) Date of filing: **31.08.2022**

(51) International Patent Classification (IPC):
**G02B 27/01** (2006.01)      **G02B 7/06** (2006.01)
**G02B 13/00** (2006.01)

(52) Cooperative Patent Classification (CPC):
**G02B 7/06; G02B 27/0172;** G02B 13/0065;
G02B 2027/0134

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021   JP 2021143660
28.09.2021   JP 2021158477**

(71) Applicant: **Canon Kabushiki Kaisha
Ohta-ku
Tokyo 146-8501 (JP)**

(72) Inventors:
• **ITO, Hiroki**
**Ohta-ku, 146-8501 (JP)**
• **FUKAI, Yosuke**
**Ohta-ku, 146-8501 (JP)**
• **NITTO, Kiyoshi**
**Ohta-ku, 146-8501 (JP)**
• **MURAKAMI, Taro**
**Ohta-ku, 146-8501 (JP)**
• **NODA, Atsuto**
**Ohta-ku, 146-8501 (JP)**
• **UEHARA, Takumi**
**Ohta-ku, 146-8501 (JP)**

(74) Representative: **TBK
Bavariaring 4-6
80336 München (DE)**

(54) **LENS APPARATUS AND IMAGE PICKUP APPARATUS**

(57)     A lens apparatus includes a first optical system, a second optical system, a first focus adjusting unit configured to simultaneously adjust focus of the first optical system and the second optical system, and a second focus adjusting unit configured to adjust a relative shift of focus positions of the first optical system and the second optical system. The first focus adjusting unit is connected to both the first optical system and the second optical system. The second focus adjusting unit is connected to one of the first optical system and the second optical system.

FIG. 11

**Description**

BACKGROUND OF THE INVENTION

Field of the Invention

The present disclosure relates to a lens apparatus and an image pickup apparatus.

Description of the Related Art

Conventionally, interchangeable lenses for stereoscopic imaging have been known as lens apparatuses. For example, each of Japanese Patent Laid-Open Nos. ("JPs") 2012-3022 and 2012-113281 discloses a lens apparatus in which two optical systems are parallelly arranged and two image circles are parallelly imaged on one image sensor. When images with parallax are to be captured, it is necessary to adjust focus for each of the two optical systems. For example, JP 2009-175498 discloses binoculars in which one operation member switches between a mechanism that moves one optical system so as to adjust left and right diopters and a mechanism that moves both optical systems so as to adjust focus.

However, in the binoculars disclosed in JP 2009-175498, the same operation member needs to switch between the simultaneous focus adjustment for the leftand right-eye optical systems and the relative focus adjustment for the left- and right-eye optical systems. Therefore, the operation is complicated, and erroneous operation makes it difficult to properly adjust the focus.

SUMMARY OF THE INVENTION

The present disclosure provides a lens apparatus and an image pickup apparatus each of which can properly adjust focus of a plurality of optical systems with a simple operation.

The present invention in its first aspect provides a lens apparatus as specified in claims 1 to 27.

The present invention in its second aspect provides an image pickup apparatus as specified in claim 28.

Further features of the present invention will become apparent from the following description of exemplary embodiments with reference to the attached drawings.

BRIEF DESCRIPTION OF THE DRAWINGS

FIG. 1 is a sectional view of a lens apparatus according to a first embodiment.
FIG. 2 is an exploded perspective view of the lens apparatus according to the first embodiment.
FIG. 3 is an exploded perspective view of the lens apparatus according to the first embodiment.
FIG. 4 is a front view of the lens apparatus according to the first embodiment.
FIG. 5 is a sectional view at A-A in FIG. 4.
FIG. 6 is a sectional view at A-A in FIG. 4.
FIG. 7 is a sectional view at B-B in FIG. 4.
FIG. 8 is a diagram illustrating a relation between each optical axis and an image circle on an image sensor according to the first embodiment.
FIG. 9 is a diagram illustrating inclusion of a second optical system in an image formed by the first optical system according to the first embodiment.
FIG. 10 is a schematic configuration diagram of an image pickup apparatus according to the first embodiment.
FIG. 11 is a schematic configuration diagram of an image pickup apparatus according to a second embodiment.
FIG. 12 is a schematic configuration diagram of the image pickup apparatus according to the second embodiment.
FIG. 13 is an exploded perspective view of a lens apparatus according to the second embodiment.
FIG. 14 is a schematic diagram of a first focus adjusting unit according to the second embodiment.
FIG. 15 is a front view of the vicinity of a lens top base according to the second embodiment.
FIG. 16 is an upper view of the vicinity of the lens top base according to the second embodiment.
FIG. 17 is an exploded perspective view of a position adjusting mechanism according to the second embodiment.
FIG. 18 is a side view of the position adjusting mechanism according to the second embodiment.
FIG. 19 is an enlarged view of the position adjusting unit and a guide portion according to the second embodiment.
FIGs. 20A and 20B are schematic diagrams illustrating a relation of load balance according to the second embodiment.

FIG. 21 is an exploded perspective view of the second focus adjusting unit according to the second embodiment.

FIG. 22 is a sectional view of a connecting part of the second focus adjusting unit and a right-eye optical system according to the second embodiment.

FIG. 23 is a perspective view illustrating a state in which a decentering-rotating member and a connecting member are connected according to the second embodiment.

FIG. 24 is a schematic diagram illustrating a positional relation between the decentering-rotating member and the connecting member according to the second embodiment.

FIG. 25 is a side view illustrating a configuration of a position adjusting mechanism of an optical system according to a third embodiment.

FIG. 26 is an enlarged view of the position adjusting unit and a guide portion of the optical system according to the third embodiment.

## DESCRIPTION OF THE EMBODIMENTS

Referring now to the accompanying drawings, a detailed description is given of embodiments according to the present disclosure.

A lens apparatus (interchangeable lens) according to each embodiment includes two optical systems (first optical system and second optical system) arranged parallelly (symmetrically) to each other, and is configured to form two image circles on one image sensor. The two optical systems are arranged horizontally and are separated from each other by a predetermined distance (base length). In a view from an image side, an image formed by a right optical system (first optical system) is recorded as a motion image or a still image for a right eye, and an image formed by a left optical system (second optical system) is recorded as a motion image or a still image for a left eye. When a motion image or a still image (image) is reproduced, and a viewer (user) views it using a known three-dimensional display or a so-called VR head-mounted display, a viewer's (user's) right eye views the image for the right eye, and a viewer's left eye views the image for the left eye. At this time, depending on the base length of the lens apparatus, the right eye and the left eye view images with parallax, and the viewer can feel a stereoscopic effect. The lens apparatus according to each embodiment is a lens apparatus (stereoscopic image pickup lens) for stereoscopic imaging in which the first optical system and the second optical system can form two images with parallax. The lens apparatus according to each embodiment may be integrally configured with an image pickup apparatus.

## FIRST EMBODIMENT

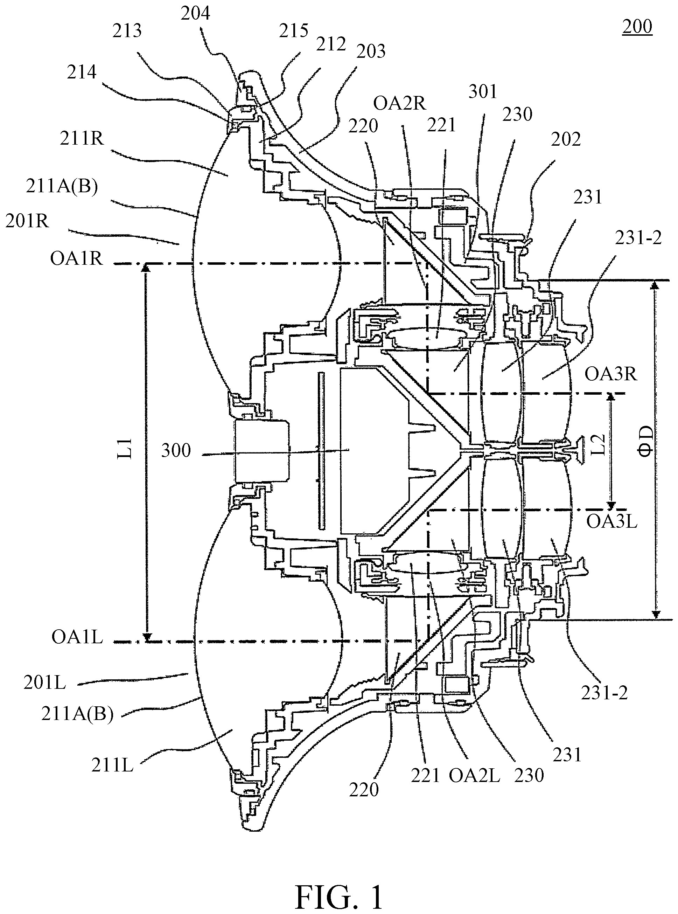

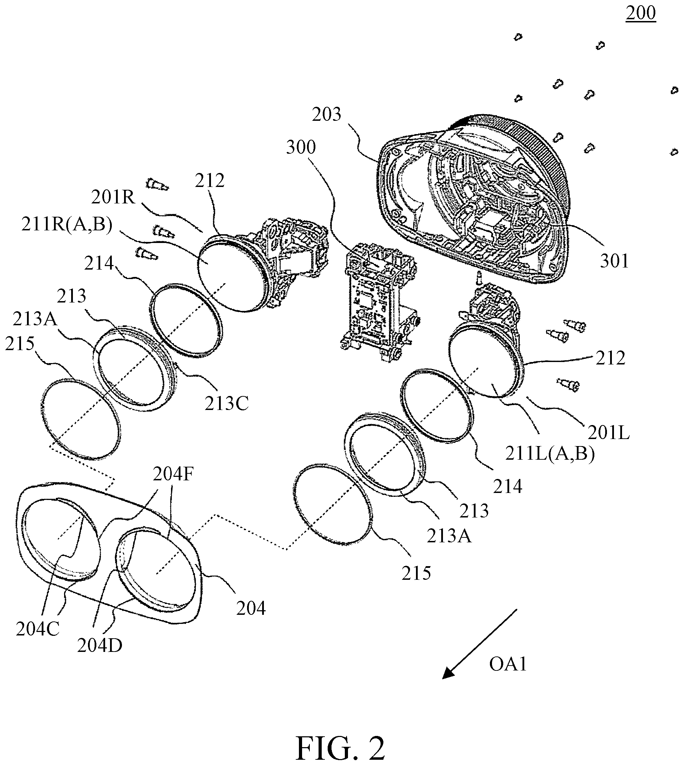

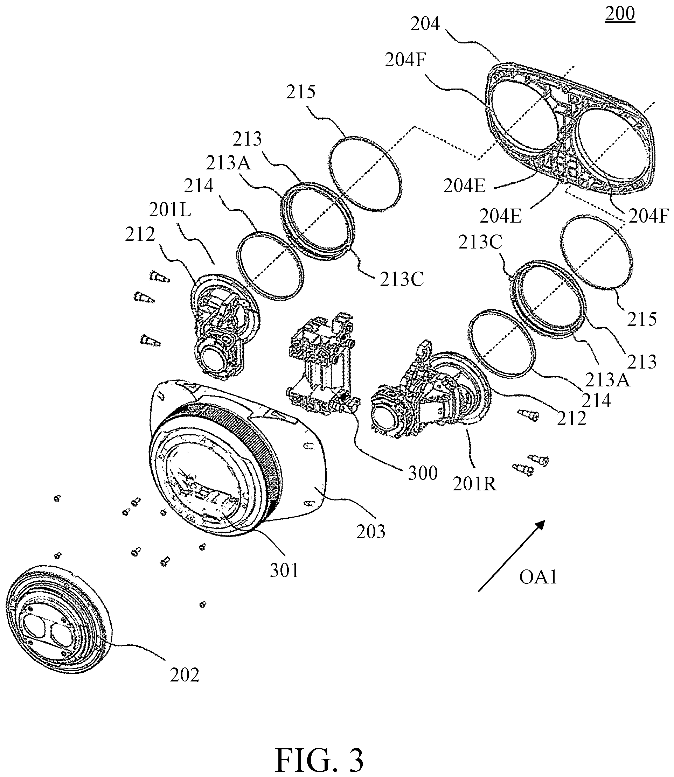

First, a description is given of a lens apparatus (interchangeable lens) 200 according to a first embodiment with reference to FIGs. 1 to 3. FIG. 1 is a sectional view of the lens apparatus 200 and illustrates a schematic configuration of a right-eye optical system (first optical system) 201R and a left-eye optical system (second optical system) 201L. FIGs. 2 and 3 are exploded perspective views of the lens apparatus 200. In the following description, R is added to an end of a reference numeral in a description of the right-eye optical system, and L is added to an end of a reference numeral in a description of the left-eye optical system. Neither R nor L is added to an end of a reference numeral in a description that is common to both the right-eye optical system and the left-eye optical system.

The lens apparatus 200 includes the right-eye optical system (first optical system) 201R and the left-eye optical system (second optical system) 201L. Each of the right-eye optical system 201R and the left-eye optical system 201L can form an image of an angle of view of 180 degrees or more. Each optical system is a bending optical system and includes, in order from an object side to an image side, a first optical axis OA1, a second optical axis OA2 substantially orthogonal to the first optical axis OA1, and a third optical axis OA3 parallel to the first optical axis OA1. Each optical system includes, along respective optical axes, a first lens unit 211 having a lens surface 211A convex to the object side and disposed on the first optical axis OA1, a second lens unit 221 disposed on the second optical axis OA2, and third lens units 231 and 231-2 disposed on the third optical axis OA3. Each lens unit includes one or a plurality of lenses. Each optical system includes a first prism (first reflecting surface) 220 that bends a light beam on the first optical axis OA1 and guides it to the second optical axis OA2, and a second prism (second reflecting surface) 230 that bends the light beam on the second optical axis OA2 and guides it to the third optical axis OA3. In the following description, the optical axis direction is a direction of the first optical axis OA1, which is a direction extending toward the object side and the image pickup plane side (image side).

Each optical system of the right-eye optical system 201R and the left-eye optical system 201L is fixed to a lens top base (holding member) 300 by tightening a screw or the like. The lens top base 300 is fixed to a lens bottom base 301 by tightening a screw or the like. A transitioning structure (not illustrated) holds the lens bottom base 301 movably forward and backward in the optical axis direction while limiting a movement of the lens bottom base 301 in a rotational direction. Thereby, the right-eye optical system 201R and the left-eye optical system 201L can move forward and backward integrally in the optical axis direction, and focus positions of the right-eye optical system 201R and the left-eye optical system 201L can be simultaneously adjusted.

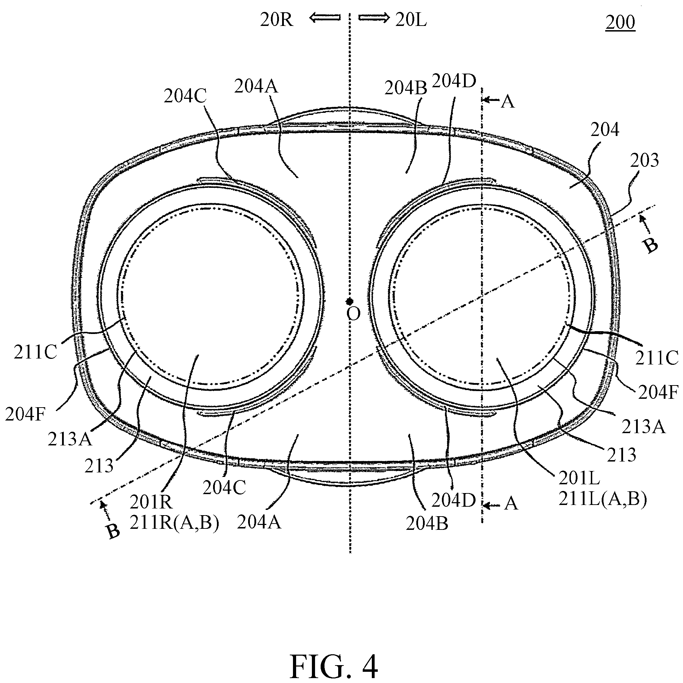

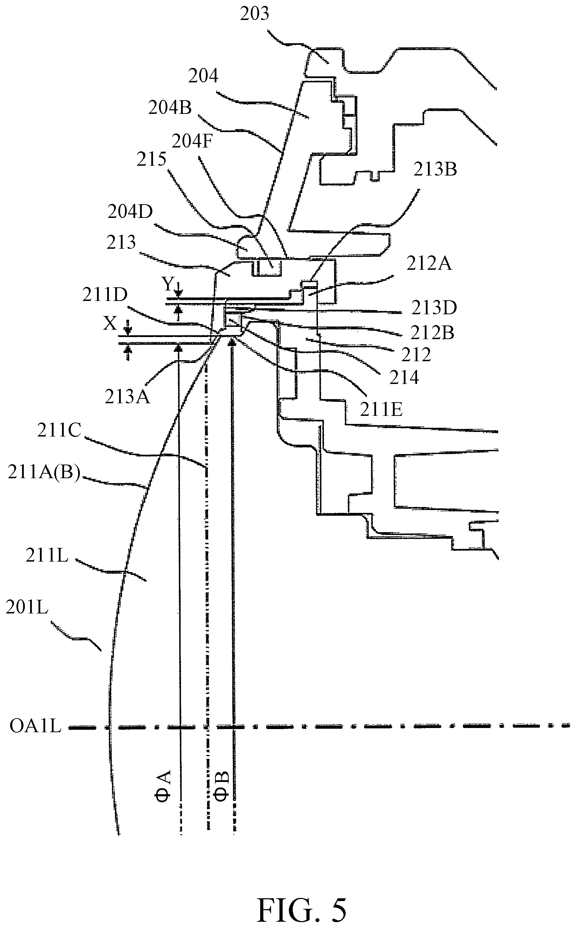

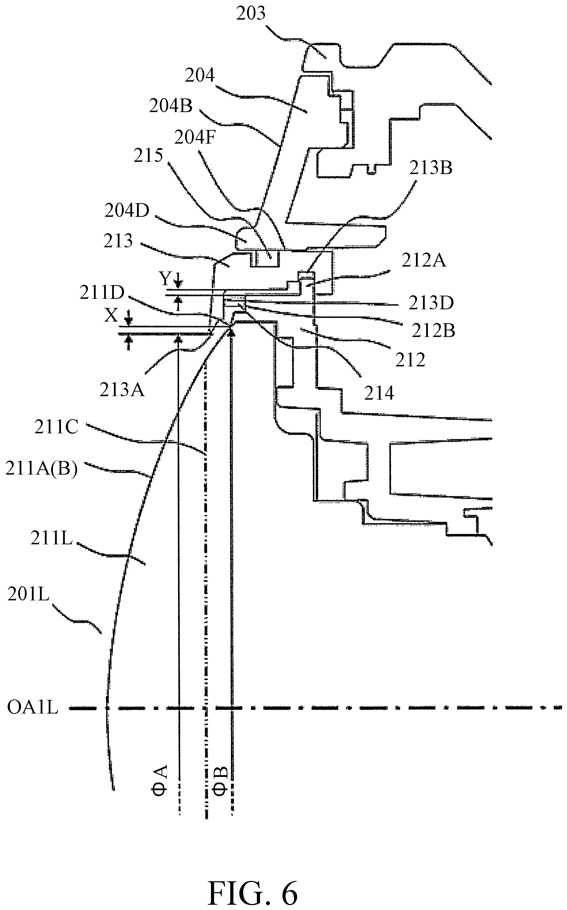

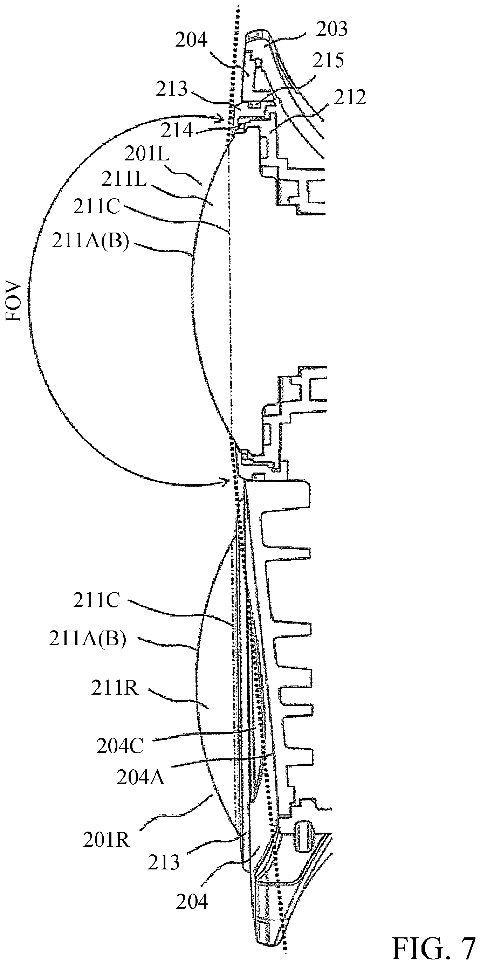

Next, a description is given of the first lens unit 211 and its peripheral configuration with reference to FIGs. 4 to 7. FIG. 4 is a front view of the lens apparatus 200. FIGs. 5 and 6 are sectional views at A-A in FIG. 4, and illustrate the first lens unit 211 and its peripheral configuration of the lens apparatus 200. FIG. 7 is a sectional view at B-B in FIG. 4, and illustrates the first lens unit 211 and its peripheral configuration of the lens apparatus 200.

The lens apparatus 200 includes an exterior cover member 203 for accommodating the right-eye optical system 201R and the left-eye optical system 201L, and a front side of the lens apparatus 200 is covered with a front surface exterior member 204 that functions as a lid. The front surface exterior member 204 is screwed and fixed to the exterior cover member 203. The front surface exterior member 204 includes openings 204F, and a first lens unit 211R of the right-eye optical system 201R and a first lens unit 211L of the left-eye optical system 201L respectively enter the openings 204F.

The front surface exterior member 204 has a shape that does not block an effective light beam from an effective angle of view of 180 degrees or more of each of the right-eye optical system 201R and the left-eye optical system 201L. Each of the first lens units 211R and 211L includes, on the object side, a lens surface 211A which also serves as an incident surface of the effective light beam. An inner side of an effective incident surface outer circumference 211C of the lens surface 211A of the first lens unit 211 is referred to as an effective incident surface 211B. A light beam from a direction of 180 degrees extends parallelly to the effective incident surface 211B of the first lens unit 211 and to a direction substantially orthogonal to the optical axis OA1 of the first lens unit 211. A light beam from a direction of more than 180 degrees is emitted from a position on the image pickup plane side of the effective incident surface 211B of the first lens unit 211, and extends toward the image pickup plane side as the distance from the first lens unit 211 increases. Therefore, in order not to block the light beam from the direction of more than 180 degrees, the front surface exterior member 204 has a surface shape such that its surface is located on the image pickup plane side of the effective incident surface 211B of the first lens unit 211. Similarly, the cover member 213 is located on the image pickup plane side of the effective incident surface 211B.

A detailed description is given with reference to FIGs. 4 and 7. As illustrated in FIG. 4, a right-eye optical system 201R side of a center point O between the right-eye optical system 201R and the left-eye optical system 201L is referred to as a right-eye area 20R, a left-eye optical system 201L side of the center point O between the right-eye optical system 201R and the left-eye optical system 201L is referred to as a left eye area 20L. In a case where an angle of view is FOV in FIG. 7, in the right-eye area 20R, the front surface exterior member 204 has a surface shape 204A that becomes closer to the image pickup plane side as a position on the front surface exterior member 204 is farther from the first lens unit 211L so as not to block an outermost effective light beam (represented by a thick dotted line in FIG. 7) of the left-eye optical system 201L. Similarly, in the left eye area 20L, the front surface exterior member 204 has a surface shape 204B that becomes closer to the image pickup plane side as a position on the front surface exterior member 204 is farther from the first lens unit 211R of the right-eye optical system 201R so as not to block the effective light beam of the right-eye optical system 201R. However, the first lens unit 211L of the left-eye optical system 201L and its surroundings include an area that blocks part of the effective light beam of the right-eye optical system 201R, and the first lens unit 211R of the right-eye optical system 201R and its surroundings includes an area that blocks part of the effective light beam of the left-eye optical system 201L.

In order to form the opening 204F on the front surface exterior member 204, the front surface exterior member 204 includes wall shapes 204C and 204D that project from the surface shape 204A and the surface shape 204B, respectively. The wall shape 204C has an arc shape that is substantially coaxial with the first lens unit 211R of the right-eye optical system 201R, and does not block the effective light beam of the right-eye optical system 201R, but blocks part of the effective light beam of the left-eye optical system 201L. Similarly, the wall shape 204D has an arc shape that is substantially coaxial with the first lens unit 211L of the left-eye optical system 201L, and does not block the effective light beam of the left-eye optical system 201L, but blocks part of the effective light beam of the right-eye optical system 201R.

Next, a description is given of the first lens units 211R and 211L that enter the openings 204F of the front surface exterior member 204 and their peripheral configurations. As illustrated in FIG. 5, lens holding members 212 configured to hold the first lens units 211R and 211L are provided. Cover members 213 including openings 213A which the first lens units 211R and 211L respectively enter are disposed so that the cover members 213 cover outer circumferential portions of the object side lens surfaces 211A of the first lens unit 211R and 211L.

On an outer circumferential side, the effective incident surface outer circumference 211C of the first lens unit 211 has a boundary 211D with the lens surface 211A. The boundary 211D is a boundary between a side surface 211E and the lens surface 211A of each of the first lens units 211R and 211L. Alternatively, as illustrated in FIG. 6, the boundary 211D may be an inner circumference of a tip of a caulking claw shape that caulks and fixes each of the first lens units 211R and 211L. The boundary 211D is a boundary between the lens surface 211A and the other surface or member. The cover member 213 covers the boundary 211D. That is, the inner diameter of the opening 213A of the cover member 213 is smaller than the diameter of the boundary 211D. An overlap amount X on one side is expressed by the following equation (1) where ΦA represents the inner diameter of the opening 213A of the cover member 213, and ΦB represents the diameter of the boundary 211D.

$$X = (ΦB-ΦA)/2 \qquad \qquad ... (1)$$

Covering the boundary 211D in this way is expected to improve appearance quality. The cover member 213 is positioned in the optical axis direction with respect to the lens holding member 212, and a predetermined backlash Y is provided in a direction orthogonal to the optical axis. The predetermined backlash Y is smaller than the overlap amount X of the cover member 213, and therefore the boundary 211D is not moved to an inner side of the opening 213A of the cover member 213 even when members shift by the backlash amount.

As illustrated in FIGs. 5 and 6, a groove portion 213B is formed on part of the inner circumference of the cover member 213, and a protruding shape 212A protruding on the outer circumference side is formed on part of the outer circumference of the lens holding member 212. The groove portion 213B and the protruding shape 212A are joined to each other in a certain phase in which they are located at positions not overlapping each other in the optical axis direction, and the protruding shape 212A enters the groove portion 213B as the cover member 213 rotates. Such a bayonet configuration enables relative positions of the cover member 213 and the lens holding member 212 to be fixed (determined or specified) in the optical axis direction. At this time, the predetermined backlash Y is provided between the inner circumference of the cover member 213 and the outer circumference of the lens holding member 212. However, the position limiting structure in the optical axis direction is not limited to this. For example, the lens holding member 212 may have a groove shape and the cover member 213 may have a protruding shape.

In this way, since the position of the cover member 213 is fixed (determined or specified) relatively to (with respect to) the lens holding member 212 in the optical axis direction, the cover member 213 can move forward and backward in the optical axis direction integrally with the lens holding member 212. The outer circumference of the cover member 213 is fitted into the inner circumference of the opening 204F of the front surface exterior member 204. Here, a backlash in the fitting of the circumferences is very small and smaller than the predetermined backlash Y.

The cover member 213 includes a rotation limiting key 213C, and the front surface exterior member 204 includes a rotation limiting groove 204E corresponding to the rotation limiting key 213C. When the front surface exterior member 204 is joined, the rotation limiting key 213C of the cover member 213 is inserted into the rotation limiting groove 204E of the front surface exterior member 204, which limits a rotation of the cover member 213. Hence, in the above-described bayonet configuration, it is possible to prevent the cover member 213 from rotating and coming off the lens holding member 212. Here, the relation in the rotation limiting structure may be opposite, and the cover member 213 may include a rotation limiting groove and the front surface exterior member 204 may include a rotation limiting key.

The cover member 213 has a surface 213D facing the image pickup plane side, and the lens holding member 212 has a surface 212B facing the object side and facing the surface 213D. An optical axis direction sealing member 214 for providing drip-proof and dustproof function is sandwiched between the surface 213D and the surface 212B. Each of the surface 213D and the surface 212B may be formed over the entire circumference, but may be formed on part thereof. By sandwiching the optical axis direction sealing member 214 in the optical axis direction, the cover member 213 and the lens holding member 212 are biased in the optical axis direction, which reduces a backlash in the optical axis direction.

In order that the predetermined backlash Y is ensured, the optical axis direction sealing member 214 is arranged with a predetermined clearance larger than the backlash Y, and thereby the optical axis direction sealing member 214 is not sandwiched in the direction orthogonal to the optical axis direction. The optical axis direction sealing member 214 is made of a material that can be elastically deformed, such as rubber and sponge, and can absorb a shift by the amount of the backlash Y in the direction orthogonal to the optical axis direction between the lens holding member 212 of the cover member 213.

A radial direction sealing member 215 for providing drip-proof and dustproof function is sandwiched between the cover member 213 and the opening 204F in the direction orthogonal to the optical axis. The radial direction sealing member 215 on the right-eye optical system 201R side is located at a position such that the radial direction sealing member 215 blocks the effective light beam of the left-eye optical system 201L. The radial direction sealing member 215 on the left-eye optical system 201L side is located at a position such that the radial direction sealing member 215 blocks the effective light beam of the right-eye optical system 201R.

The above configuration enables stereoscopic imaging of an angle of view of 180 degrees or more, and maintenance of the appearance quality and dustproof and drip-proof performance. Since the lens holding member 212 is not directly fitted into the opening 204F of the front surface exterior member 204, the position of the lens holding member 212 is not changed even in a case where the position is shifted by an effect of a manufacturing error or the like. Therefore, the optical performance and a relative error between the right-eye optical system 201R and the left-eye optical system 201L are not changed by joining the front surface exterior member 204.

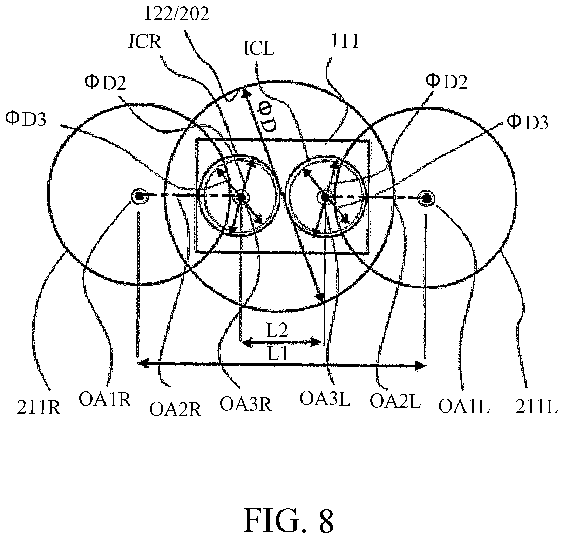

FIG. 8 is a diagram illustrating a relation between positions of image circles on the image sensor 111 on the camera main body 110 side and the position of each optical axis and a mount of the lens apparatus 200. On the image sensor 111 of the camera main body 110, a right-eye image circle ICR of an effective angle of view formed by the right-eye optical system 201R and a left-eye image circle ICL of an effective angle of view formed by the left-eye optical system 201L are imaged in parallel. Sizes $\Phi D2$ of the image circles and a separation distance between the image circles may be set so that the image circles do not overlap each other as much as possible. For example, when a light receiving range of the image sensor 111 is assumed to be divided into half areas on left and right sides at the center, the center of the right-eye image circle ICR may be set to a position substantially in the center of the right area of the light receiving range, and the center of the left-eye image circle ICL may be set to a position substantially in the center of the left area of the light receiving range.

The optical system according to this embodiment is an all-around fisheye lens, and the image formed on the image pickup plane is a circular image that images a range of the angle of view of more than 180 degrees. As illustrated in FIG. 8, two circular images are formed on the left and right sides, respectively. A distance between the first optical axis OA1R of the right-eye optical system 201R and the first optical axis OA1L of the left-eye optical system 201L is referred to as a base length L1. The longer the base length L1, the greater the stereoscopic effect when an image is viewed.

For example, a sensor size is 24 mm in length $\times$ 36 mm in width, a diameter of the image circle is $\Phi 17$ mm, a separation distance L2 between the third optical axes OA3R and OA3L is 18 mm, and the length of the second optical axis OA2 is 21 mm. In a case where each optical system is arranged so that the second optical axis OA2 extends in the horizontal direction, the base length L1 illustrated in FIG. 1 is 60 mm, which is substantially equal to a distance between eyes of an adult. The diameter $\Phi D$ of the lens mount portion 202 may be shorter than the base length L1. In a case where the distance L2 between the third optical axes OA3R and OA3L is shorter than the diameter $\Phi D$ of the lens mount portion 202, the third lens units 231 and 231-2 can be located inside the mount. That is, in this embodiment, the relation expressed by the following equation (2) is satisfied.

$$L1 > \Phi D > L2 \qquad \ldots (2)$$

When an image is viewed as VR, it is said that an angle of view that provides a stereoscopic effect is about 120 degrees. However, in a case where the angle of view is 120 degrees, the stereoscopic effect becomes unnatural, and therefore the angle of view is often widened to 180 degrees. Since the effective angle of view is more than 180 degrees in this embodiment, the size $\Phi D3$ of the image circle in the range of 180 degrees satisfies the relation expressed by the following inequality (3).

$$\Phi D2 > \Phi D3 \qquad \ldots (3)$$

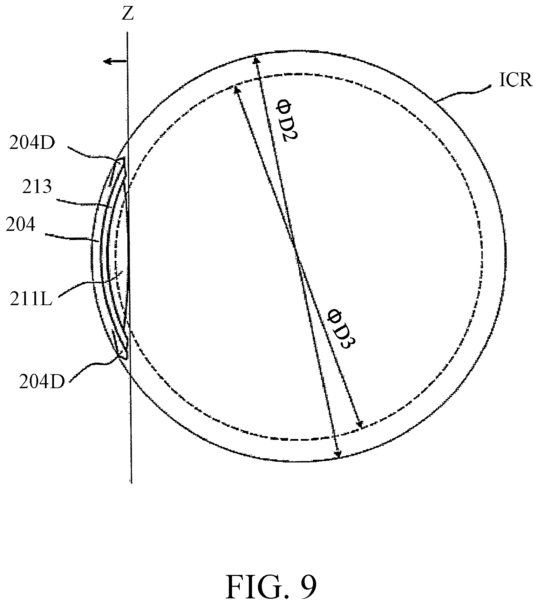

FIG. 9 illustrates inclusion of the second optical system in an image formed by the first optical system. The above-described wall shape 204C (D) of the front surface exterior member 204 is imaged inside the effective angle of view $\Phi D2$, but is not imaged at the angle of view of 180 degrees and is imaged outside $\Phi D3$. Therefore, in a case where the image is viewed as VR, there is no effect if the angle of view of 180 degrees is viewed. For example, the effective angle of view of the right-eye optical system 201R includes part of the first lens unit 211L of the left-eye optical system 201L, the cover member 213, and the wall shape 204D of the front surface exterior member 204 each of which is located in the left eye area 20L. They are imaged in the actual effective imaging range as illustrated in FIG. 9. Only the first lens unit 211L is imaged in the image circle of the angle of view of 180 degrees (inside $\Phi D3$), but the others, the cover member 213 and the wall shape 204D, are imaged outside the image circle of the angle of view of 180 degrees. The wall shape 204D is imaged on an outer side (left side in FIG. 9) of a vertex portion of the first lens unit 211L even when viewed from a horizontal direction. In a fish-eye circular image, the wall shape 204D is imaged on the outer side of the vertex of the first lens unit 211L even when viewed from the horizontal direction, and therefore it is beneficial when the inclusion of the adjacent lens is trimmed during image processing or image editing. That is, in this case, as long as trimming is performed such that the vertex of the first lens unit 211L, which is always imaged due to the specifications, and its outer side are cut in the horizontal direction, that is, as long as, for example, the outer side in the horizontal direction of a straight line Z in FIG. 9 is trimmed off at the straight line Z, the inclusion (imaging) of the wall shape 204D does not have any effect. Therefore, there is an advantage that the minimum necessary cut is required. The above-described points are similarly applied to inclusion of the first optical system in an image formed by the second optical system.

As described above, although the wall shape 204D is included within the effective angle of view, the wall shape 204D is located at a position such that the wall shape 204D has almost no effect on imaging for actual VR use.

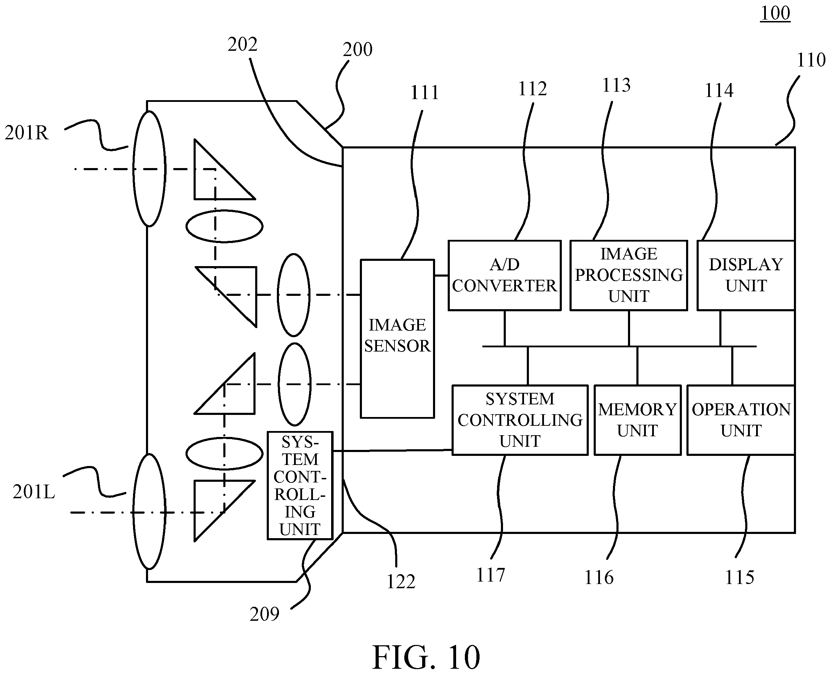

FIG. 10 is a diagram illustrating an example of a schematic configuration of an image pickup apparatus 100 capable of capturing a stereoscopic image. In FIG. 10, the image pickup apparatus 100 includes a camera main body 110 and a lens apparatus 200. The lens apparatus 200 is detachably attachable to the camera main body 110. In this embodiment, the image pickup apparatus 100 is an image pickup system including the camera main body (image pickup apparatus main body) 110 and the lens apparatus (interchangeable lens) 200 detachably attachable to the camera main body 110. However, this embodiment is not limited to this, and can be applied to an image pickup apparatus in which the camera main body and the lens apparatus are integrally configured.

The lens apparatus 200 includes the right-eye optical system 201R, the left-eye optical system 201L, and a lens system controlling unit 209. The camera main body 110 includes an image sensor 111, an A/D converter 112, an image processing unit 113, a display unit 114, an operation unit 115, a memory unit 116, a main body system controlling unit 117, and a camera mount 122. When the lens apparatus 200 is attached to a camera mount 122 of the camera main body 110 via a lens mount portion 202, the main body system controlling unit 117 and the lens system controlling unit 209 are electrically connected.

An image of an object is formed on the image sensor 111 in a manner that a right-eye image formed via the right-eye optical system 201R and a left-eye image formed via the left-eye optical system 201L are arranged side by side. The image sensor 111 converts the image (optical signal) of the imaged object into an analog electric signal. The A/D converter 112 converts the analog electric signal output from the image sensor 111 into a digital electric signal (image signal). The image processing unit 113 performs various image processing on the digital electric signal (image signal) output from the A/D converter 112.

The display unit 114 displays various information. The display unit 114 is realized by providing, for example, an electronic viewfinder and a liquid crystal panel. The operation unit 115 has a function as a user interface for a user to give an instruction to the image pickup apparatus 100. In a case where the display unit 114 includes a touch panel, the touch panel also serves as part of the operation unit 115. The memory unit 116 stores various data such as image data processed by the image processing unit 113. The memory unit 116 also stores a program. The memory unit 116 is realized by providing, for example, a ROM, a RAM, and an HDD. The main body system controlling unit 117 controls the entire image pickup apparatus 100. The main body system controlling unit 117 is realized by providing, for example, a CPU.

SECOND EMBODIMENT

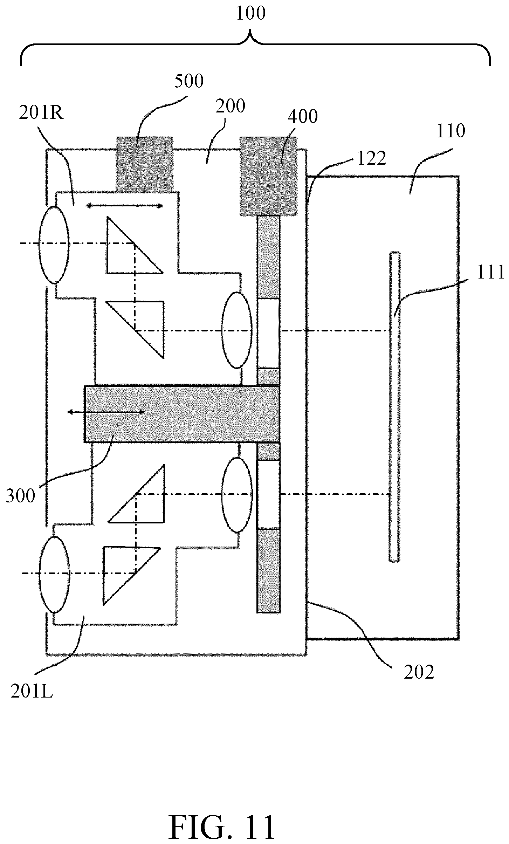

Next, a description is given of a second embodiment. FIG. 11 is a schematic configuration diagram illustrating an image pickup apparatus 100 according to this embodiment. The image pickup apparatus 100 includes a camera main body (image pickup apparatus main body) 110 and an interchangeable lens (lens apparatus) 200 detachably attachable to the camera main body 110. As in the first embodiment, the interchangeable lens (lens apparatus) 200 is used in a state where the interchangeable lens 200 is attached to the camera main body 110.

The image pickup apparatus 100 is an image pickup apparatus having a so-called interchangeable lens mount and includes a single image sensor 111. The lens apparatus 200 is a lens apparatus including a right-eye optical system 201R and a left-eye optical system 201L as described above. In the lens apparatus 200 according to this embodiment, the left- and right-eye optical systems are attached to a lens top base (holding member) 300.

The left-eye optical system 201L is fixed to the lens top base 300. On the other hand, the right-eye optical system 201R is supported movably in a direction orthogonal to the image sensor 111 with respect to the lens top base 300. As a result, the left-eye optical system 201L and the right-eye optical system 201R can move relatively to each other in the direction orthogonal to the image sensor 111. The right-eye optical system 201R and the left-eye optical system 201L according to this embodiment are the same optical systems, are configured as lens units whose imaging optical systems (image pickup optical system) are integrated, and are capable of adjusting focus by extending and contracting the entire optical systems. The lens apparatus 200 are to be used for creating parallax images as described above. Hence, if the left- and right-eye optical systems are different, or if a configuration is such that part of the lenses in the entire optical systems serves as a focus lens, optical characteristic may be different between left and right images, and as a result, the left and right images may become unnatural parallax images.

In this embodiment, since each of the left- and right-eye optical systems are configured such that focus is adjusted by extending and contracting the entire optical system as described above, the difference can be reduced between characteristics of the optical systems of the left and right lenses. In this embodiment, the left-eye optical system 201L is referred to as a first optical system, and the right-eye optical system 201R is referred to as a second optical system. However, this embodiment is not limited to this. For example, the first optical system and the second optical system may be the opposite optical systems, respectively, and the optical systems may be optical systems arranged vertically instead of the optical systems arranged on the left and right.

The image pickup apparatus 100 includes a lens mount portion 202, and the lens apparatus 200 is attached via the lens mount portion 202. Therefore, the image sensor 111 in the image pickup apparatus 100 is arranged parallelly to the lens mount portion 202. However, it is difficult to make this arrangement completely parallel due to a manufacturing error, and the image sensor 111 is fixed while the image sensor 111 is slightly tilted with respect to (relatively to) the lens mount portion 202.

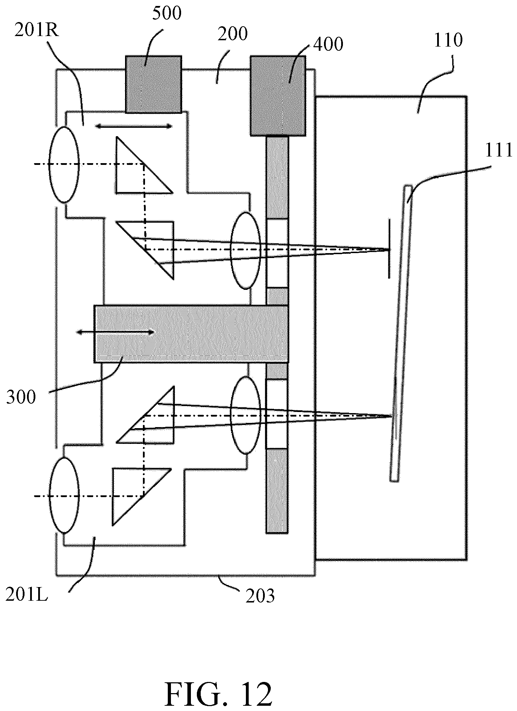

FIG. 12 is a schematic configuration diagram illustrating the image pickup apparatus 100, and schematically illustrates a state in which the image sensor 111 is fixed while being slightly tilted with respect to the lens mount portion 202. During a manufacturing process, in the lens apparatus 200, a distance can be adjusted from the mount portion to an imaging position of each of the right-eye optical system 201R and the left-eye optical system 201L, that is, so-called a flange back distance can be adjusted. However, even in a case where a difference between the flange backs is made close to 0, the left- and right-eye optical systems are not always set to their respective best in-focus positions because the image sensor 111 is tilted in the image pickup apparatus 100. Therefore, in this embodiment, the right-eye optical system 201R is configured so that it can be moved in an axial direction orthogonal to the image pickup plane as described above, and thereby the relative focus positions can be adjusted for the left and right eyes.

On the other hand, adjusting the flange backs of the left- and right-eye optical systems every imaging would cause a miss of imaging opportunity by taking time for an adjustment work, and would make the operation complicated. For avoiding this, a configuration needs to be such that focusing operation can be performed quickly and accurately by a simple method. Therefore, this embodiment provides the lens top base 300 that holds the right-eye optical system 201R and the left-eye optical system 201L and a first focus adjusting unit (focus ring) 400 that drives the lens top base 300 in the axial direction orthogonal to the image pickup plane. The first focus adjusting unit 400 allows the right-eye optical system 201R and the left-eye optical system 201L to be simultaneously moved in the axial direction orthogonal to the image sensor 111, and enables simultaneous focus adjustment of the left- and right-eye optical systems while they are held together. The first focus adjusting unit 400 is attached to an exterior cover member 203, and therefore the user can operate the first focus adjusting unit 400.

Similarly, the user can operate a second focus adjusting unit 500 also attached to the exterior cover member 203, and the second focus adjusting unit 500 is connected to the right-eye optical system 201R and can move the right-eye optical system 201R in the axial direction orthogonal to the image sensor 111. The second focus adjusting unit 500 adjusts a relative shift between focus positions of the right-eye optical system 201R and the left-eye optical system 201L.

Since the user can operate them independently, the user can adjust, by using the second focus adjusting unit 500, the flange backs of the left- and right-eye optical systems of the lens apparatus 200 depending on the tilt of the image sensor 111 in the image pickup apparatus 100 that the user owns. In imaging, if the relative shift is adjusted between the flange back positions of the left- and right-eye optical systems in advance, the in-focus operation can be quickly performed simultaneously on both the left- and right-eye optical systems by adjustment only using the first focus adjusting unit 400. Both the first focus adjusting unit 400 and the second focus adjusting unit 500 are rotatably held by the exterior cover member 203, and both of them are fixed so that they do not move in an in-focus direction. The in-focus direction in this embodiment is the axial direction orthogonal to the image sensor.

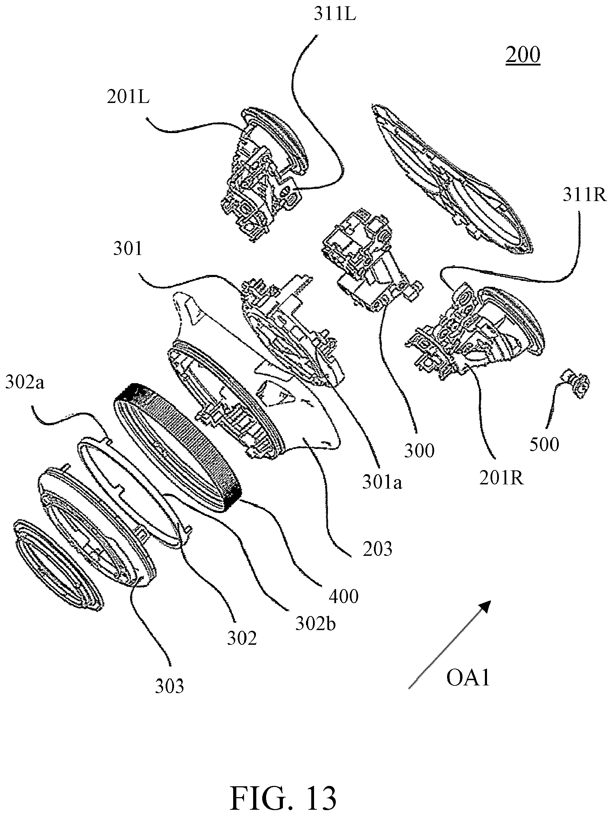

Next, with reference to FIG. 13, a detailed description is given of a configuration for realizing the above-described focusing mechanism. FIG. 13 is an exploded perspective view of the lens apparatus 200 according to this embodiment.

The right-eye optical system 201R is held movably in the direction orthogonal to the image sensor 111 with respect to the lens top base 300. On the other hand, the left-eye optical system 201L is fixed to the lens top base 300. The lens top base 300 is fixed to a lens bottom base 301 with a screw or the like. The lens bottom base 301 includes a cam follower portion 301a at each of three locations. The cam follower portion 301a is in contact with a cam member 302 described below, and therefore the lens bottom base 301 can be driven in the direction orthogonal to the image sensor 111. The cam member 302 is engaged with and held by an exterior member 303. The cam member 302 is engaged with the first focus adjusting unit (focus ring) 400 at a key portion 302a, and therefore the user can rotate the cam member 302 connected to an inside of the lens apparatus 200 by rotating the first focus adjusting unit 400. The first focus adjusting unit 400 is sandwiched between the exterior member 303 and the cover member 304 so that the first focus adjusting unit 400 is held in a radial direction by the exterior member and is rotatably held in the axial direction by being sandwiched between the two members. When the cam member 302 is rotated, the lens bottom base 301 moves along a slope portion 302b provided on the cam member 302, the left- and right-eye optical systems become movable in the axial direction orthogonal to the image sensor 111, and the focus of the left- and right-eye optical system can be adjusted.

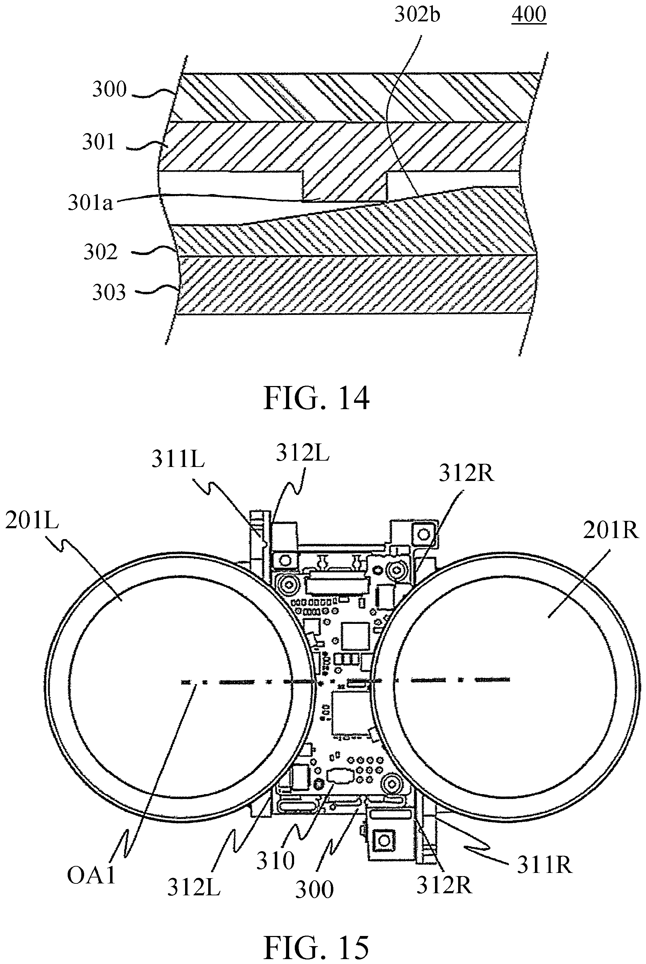

FIG. 14 is a schematic diagram illustrating the first focus adjusting unit 400 of the image pickup apparatus 100. The lens top base 300 is configured integrally with the lens bottom base 301 by a screw or the like fastening the lens top base 300 and the lens bottom base 301. The cam follower portion 301a formed on the lens bottom base 301 is biased and supported by a spring or the like so that the cam follower portion 301a is in contact with the slope portion 302b formed on the cam member 302. The cam member 302 is rotatably biased against the exterior member 303 by the spring or the like and supported by the exterior member 303 described above, and is rotatably held while its outer circumference portion is fitted into the exterior member 303, which is a so-called circumference-fitting state. This allows a rotation operation on the first focus adjusting unit 400 to drive the lens top base 300 to which the left- and right-eye optical systems are fixed.

The right-eye optical system 201R is driven in the axial direction orthogonal to the image sensor 111 while the right-eye optical system 201R is connected to the second focus adjusting unit 500 described below. Each of the left- and right-eye optical systems are fixed to the lens top base 300. However, the right-eye optical system 201R can be driven in the axial direction orthogonal to the image sensor 111, the relative focus of the left- and right-eye optical systems can be adjusted by the second focus adjusting unit 500, and focus of both the left- and right-eye optical systems can be integrally adjusted by the first focus adjusting unit 400.

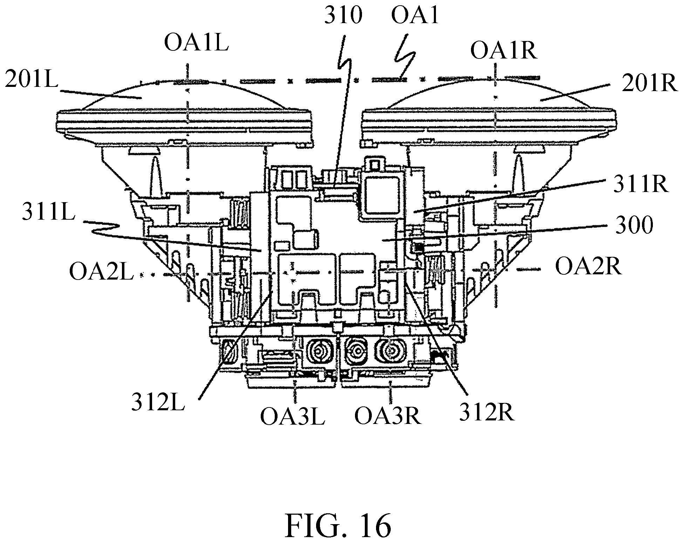

Next, with reference to FIGs. 15 and 16, a detailed description is given of a mechanism for attaching the right- (left-) eye optical system 201R (L) to the lens top base 300. FIG. 15 is a front view illustrating the vicinity of the lens top base 300. FIG. 16 is an upper view illustrating the vicinity of the lens top base 300.

As in FIGs. 3 and 13, the right-eye optical system 201R and the left-eye optical system 201L are arranged so that the lens top base 300 is disposed in between. A base prism bottom 311L (R) included in the left- (right-) eye optical system 201L (R) can be attached to and detached from the lens top base 300 in a left and right direction in the drawings. The lens top base 300 is disposed between first optical axes OA1L and OA1R and is penetrated by second optical axes OA2L and OA2R. If the lens top base 300 is disposed between third optical axes OA3L and OA3R, a distance between the third optical axes OA3L and OA3R becomes so wide that the light beams cannot enter the mount, and the entire size of the apparatus increases.

A surface on which two members of the lens top base 300 and the base prism bottom 311R are mated (that is, a surface on which the right-eye optical system 201R is connected to the lens top base 300) is referred to as a connecting surface (first connecting surface) 312R. Similarly, a surface on which two members of the lens top base 300 and the base prism bottom 311L are mated (that is, a surface on which the left-eye optical system 201L is connected to the lens top base 300) is referred to as a connecting surface (second connecting surface) 312L. The connecting surface 312L (R) is disposed in a direction orthogonal to a line OA1 that connects the two first optical axes OA1L and OA1R along a direction orthogonal to the first optical axis OA1L (R). The connecting surface 312L (R) is disposed parallelly to the first optical axis OA1L (R) and the third optical axis OA3L (R), and is located between the first optical axis OA1L (R) and the third optical axis OA3L (R). Such an arrangement can improve space efficiency and allows a circuit board 310 to be disposed between the two connecting surfaces 312L and 312R. The connecting surface 312L (R) is disposed orthogonally to the second optical axis OA2L (R).

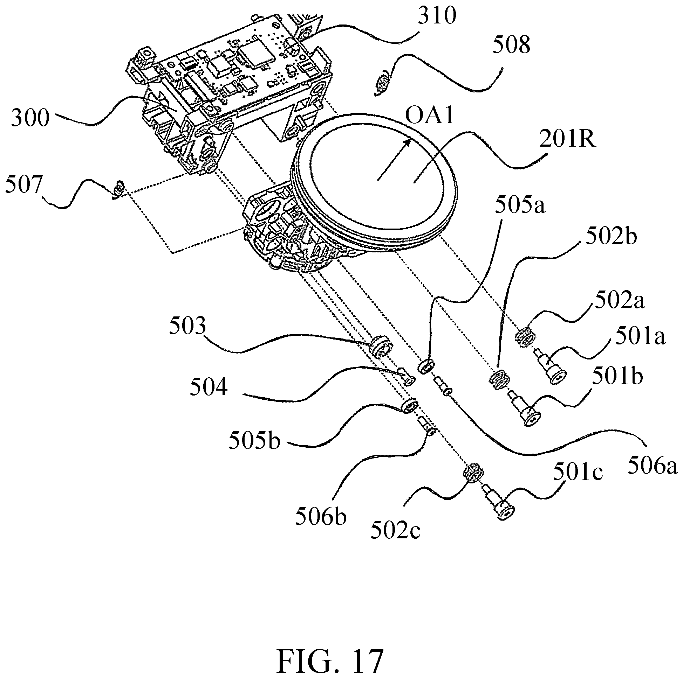

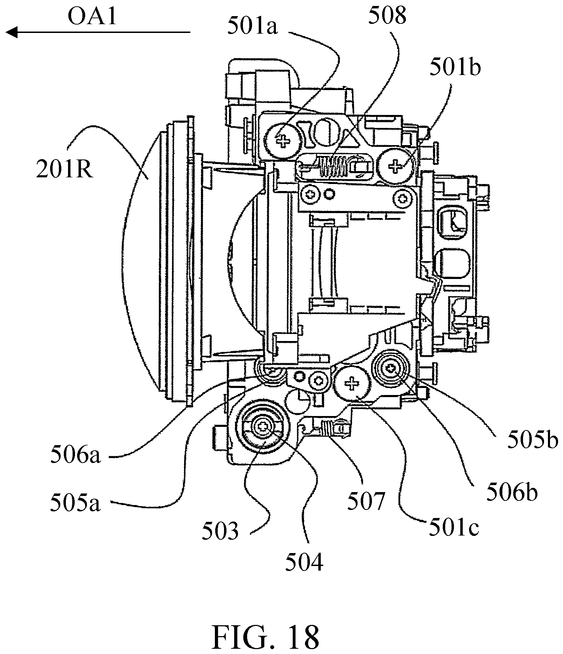

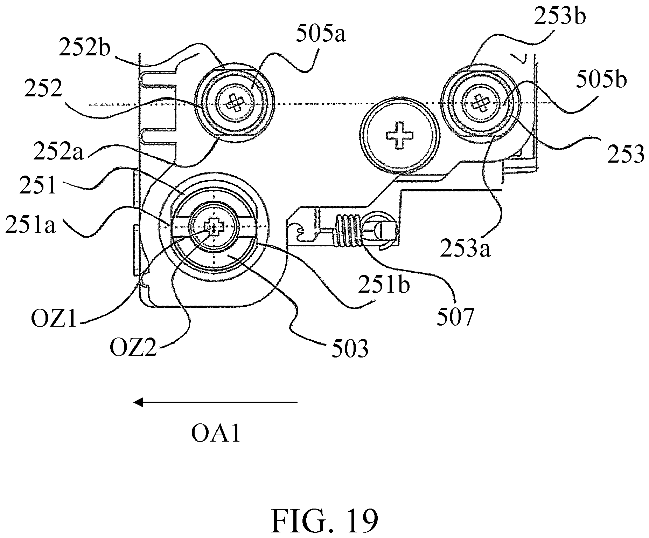

Next, with reference to FIGs. 17 to 19, a detailed description is given of a focus position adjusting mechanism for moving the right-eye optical system 201R with respect to the lens top base 300. FIG. 17 is an exploded perspective view of a position adjusting mechanism for adjusting a position of the right-eye optical system 201R with respect to the lens top base 300. FIG. 18 is a side view of the position adjusting mechanism. FIG. 19 is an enlarged view of an adjusting portion and a guide portion of the right-eye optical system 201R.

As illustrated in FIGs. 17 and 18, the right-eye optical system 201R is always biased against the lens top base 300 in a predetermined direction (attachment direction) by three screws 501a, 501b, and 501c and three compression springs (first biasing member) 502a, 502b, and 502c. In this state, the right-eye optical system 201R is in contact with and attached to the connecting surface (first connecting surface) 312R, which is an attachment portion of the lens top base 300. At a time when a decentering-rotating member (position adjusting unit) 503 is rotatably attached to the lens top base 300 by a shoulder screw 504, an outer circumference of the decentering-rotating member 503 is fitted into a hole portion 251 of the right-eye optical system 201R.

As illustrated in FIG. 19, in the decentering-rotating member 503, an outer shape center OZ2 is decentered from a rotation center OZ1. As the decentering-rotating member 503 rotates, the right-eye optical system 201R can be adjusted in the optical axis direction while the right-eye optical system 201R slides on the lens top base 300 by a decentered amount of the outer shape center OZ2 with respect to the rotation center OZ1. A first tension spring (third biasing member) 507 is hooked to the right-eye optical system 201R and the lens top base 300 so that they bias each other in the optical axis direction. Therefore, when the decentering-rotating member 503 rotates, the right-eye optical system 201R is moved in the optical axis direction with respect to the lens top base 300 by the decentering-rotating member 503 coming into contact with a D-cut portion 251a of the hole portion 251. Further, the right-eye optical system 201R is configured to be moved parallelly to the optical axis direction by the rotation of the decentering-rotating member 503. Specifically, two rolling bearings (guide portion) 505a and 505b are arranged parallelly to the optical axis direction and are rotatably attached to the lens top base 300 by shoulder screws 506a and 506b. The two rolling bearings 505a and 505b are fitted into straight guide portions 252a, 252b, 253a, and 253b of guide holes 252 and 253 of the right-eye optical system 201R, and thereby the two rolling bearings 505a and 505b serve as a straight guide unit for the right-eye optical system 201R to move in a direction parallel to the optical axis (adjustment direction).

As illustrated in FIG. 18, a second tension spring (second biasing member) 508 is hooked to the right-eye optical system 201R and the lens top base 300. The second tension spring 508 is disposed on an opposite side to the decentering-rotating member 503 across the optical axis of the right-eye optical system 201R, and biases the right-eye optical system 201R simultaneously in the adjustment direction and in a direction orthogonal to the adjustment direction in the same plane as the adjustment direction. Such a configuration biases the right-eye optical system 201R in the optical axis direction, and at the same time, generates a rotation moment from the contact portion as a starting point between the decentering-rotating member 503 and the D-cut portion 251a of the right-eye optical system 201R. The force of the second tension spring 508 prevents the right-eye optical system 201R from rattling and makes the right-eye optical system 201R movable while being guided by the two rolling bearings 505a and 505b.

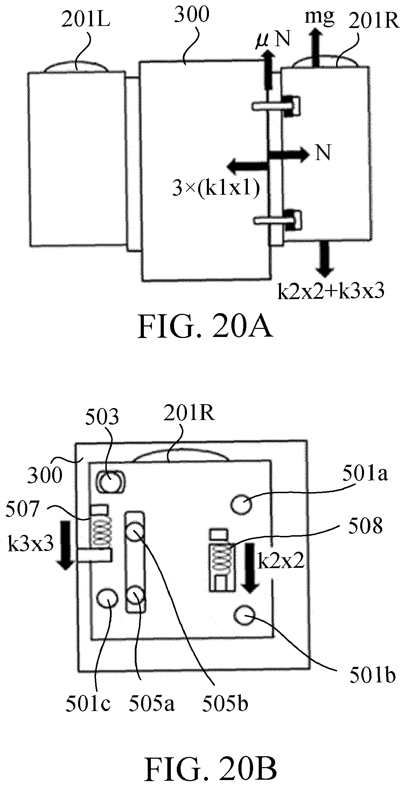

Next, a description is given of a relation between weight, frictional force, and spring (relation of load balance) generated between the lens top base 300 and the right-eye optical system 201R with reference to FIGs. 20A and 20B. FIGs. 20A and 20B are schematic diagrams illustrating the relation of load balance. m represents a mass of the right-eye optical system 201R, g represents a gravitational acceleration, and μ represents a static friction coefficient occurring between the lens top base 300 and the right-eye optical system 201R. N represents a vertical resistance force occurring between the right-eye optical system 201R or the left-eye optical system 201L and the lens top base 300. k1 represents a spring constant and x1 represents a displacement amount (elongation amount) of each of the three compression springs 502a to 502c, k2 represents a spring constant and x2 represents a displacement amount of the second tension spring 508, and k3 represents a spring constant and x3 represents a displacement amount of the first tension spring 507. Here, in a state where the right-eye optical system 201R faces a gravity direction, the following conditional expressions (4) and (5) may be satisfied.

$$\mu N + mg < k2x2 + k3x3 \qquad \ldots (4)$$

$$N = 3 \times (k1x1) \qquad \ldots (5)$$

In a case where the first tension spring 507 is not included, the following conditional expressions (4a) and (5a) may be satisfied. In the conditional expression (5a), N represents a sum of the spring constants of the three compression springs 502a to 502c.

$$\mu N + mg < k2x2 \qquad \ldots (4a)$$

$$N = k1x1 \qquad \ldots (5a)$$

In a case where the first tension spring 507 is included, the following conditional expressions (4b) and (5b) may be satisfied. In the conditional expression (5a), N represents the sum of the spring constants of the three compression springs 502a to 502c.

$$\mu N + mg < k2x2 + k3x3 \qquad \ldots (4b)$$

$$N = k1x1 \qquad \ldots (5b)$$

With such a load balance, the decentering-rotating member 503 and the right-eye optical system 201R are always in contact with each other without rattling, regardless of an orientation or a position of the lens apparatus 200. Therefore, a problem does not occur such that a lens unit of the right-eye optical system 201R does not follow the adjustment by the decentering-rotating member 503. The above-described configuration allows the user to move the right-eye optical system 201R as intended without rattling, even in a case where an adjustment unit is located at a position away from the optical axis. Similarly, the left-eye optical system 201L is also in contact with and attached to a base prism bottom 311L as a mounting surface of the lens top base 300, is provided with the same adjustment mechanism as that of the right-eye optical system 201R, and is configured to be slidable in the direction parallel to the optical axis.

The second focus adjusting unit, which is described below, is connected to the right-eye optical system 201R and thereby the user can externally adjust the right-eye optical system 201R. If, in an assembly process of the lens apparatus 200, the left-eye optical system 201L is also configured so that the left-eye optical system 201L can be adjusted, it is possible to increase the degree of freedom in adjusting the position during assembly. The right-eye optical system 201R and the left-eye optical system 201L are slidably attached to the lens top base 300 via no component disposed in between, the relative tilt and decentering are reduced between the left- and right-eye optical systems 201R and 201L during focus adjustment. In this embodiment, the description is given of the decentering-rotating member as an example of an adjusting member for adjusting the focus position of the optical system, but the adjusting member may not be the decentering-rotating member. Although the description is given of the rolling bearing as an example of a straight guiding member, the straight guiding member is not limited to this, and may be a bar member that guides the optical system in a straight direction.

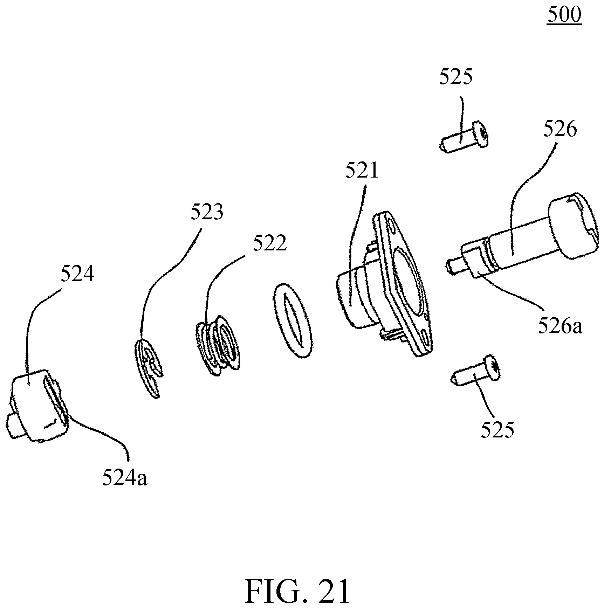

Next, a detailed description is given of the second focus adjusting unit 500 with reference to FIG. 21. FIG. 21 is an exploded perspective view of the second focus adjusting unit 500. A small base 521 is attached to the cover member 304 described above by a screw 525. An adjusting pin 526 is inserted into and fixed to the small base 521. The adjusting pin 526 inserted into the small base 521 is held by a biasing spring 522 biasing the adjusting pin 526 in an insertion direction. The biasing spring (elastic member) 522 is sandwiched between a retaining ring 523 attached to a tip of the adjusting pin 526 and the small base 521, and holds and biases the adjusting pin 526 against the small base 521. A connecting member 524 is engaged with the tip of the adjusting pin 526. The tip of the adjusting pin 526 incudes a first guide portion 526a engaged with the connecting member 524. The first guide portion 526a is movably held in a direction orthogonal to a shaft of the adjusting pin 526 by an engagement with a second guide portion 524a provided on the connecting member 524.

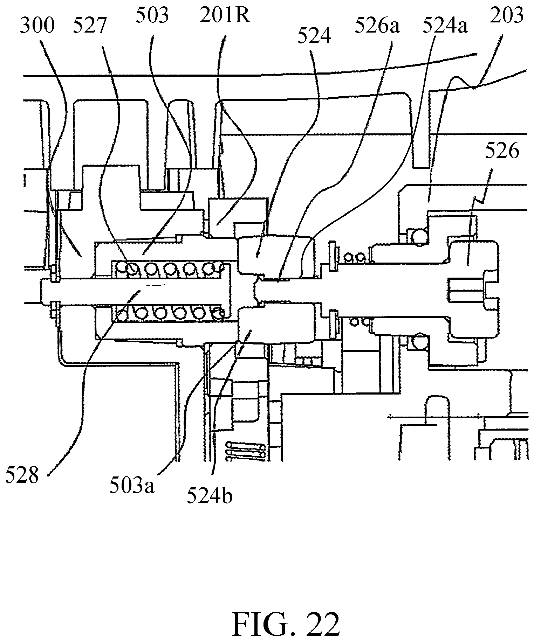

Next, with reference to FIG. 22, a detailed description is given of a connecting part of the second focus adjusting unit 500 and the right-eye optical system 201R. FIG. 22 is a sectional view of the connecting part of the second focus adjusting unit 500 and the right-eye optical system 201R.

As described above, the first guide portion 526a, which is the tip of the adjusting pin 526, and the second guide portion 524a provided on the connecting member 524 are held in an engaged state. On the other hand, the connecting member 524 includes a third guide portion 524b on a side facing the second guide portion 524a. In this embodiment, the second guide portion 524a is formed as a hole having a long groove shape, while the third guide portion 524b is formed as a protrusion having a key shape. However, this embodiment is not limited to this, and the shapes of the groove and the protrusion may be exchanged. The third guide portion 524b is engaged with a fourth guide portion 503a provided on the decentering-rotating member 503.

Here, the second guide portion 524a and the third guide portion 524b in the connecting member 524 are arranged in directions intersecting each other. In this embodiment, the second guide portion 524a and the third guide portion 524b are arranged in directions orthogonal to each other. Therefore, a direction in which the connecting member 524 can engage with and move relatively to the adjusting pin 526 is a direction orthogonal to the shaft of the adjusting pin 526, and a direction in which the connecting member 524 can move with respect to the decentering-rotating member 503 is a direction orthogonal to those. As a result, even in a case where a positional relation between the exterior cover member 203 and the right-eye optical system 201R is changed by the operation on the first focus adjusting unit 400, the right-eye optical system 201R can be independently moved in the directions orthogonal to the image sensor 111 by rotating the adjusting pin 526.

A description will be given later of a connection form when the first focus adjusting unit 400 and the second focus adjusting unit 500 are operated. With the above-described configuration, when the user rotates the adjusting pin 526, the rotation (rotational driving force) can be transmitted to the decentering-rotating member 503. As described above, the decentering-rotating member 503 can move the right-eye optical system 201R by rotating itself and moving the contact portion with the decentered right-eye optical system 201R in the axial direction orthogonal to the image sensor 111. This makes it possible to change the relative positional relation between the right-eye optical system 201R and the left-eye optical system 201L that is fixed to the lens top base 300.

The decentering-rotating member 503 is provided with a friction holding force by being biased against the lens top base 300 by a biasing spring 527 and a stopper pin 528. This makes it possible to prevent the right-eye optical system 201R from being easily moved by an unintended shock or the like. In this embodiment, a description is given of the second focus adjusting unit 500 connected to the right-eye optical system 201R as an example, but the left-eye optical system 201L may be also provided with a focus adjusting mechanism, and the left-eye optical system 201L may be connected to the second focus adjusting unit 500. Alternatively, each of the left- and right-eye optical systems may be provided with a mechanism that allows the user to rotate the adjusting pin 526 so as to adjust each of them from the outside.

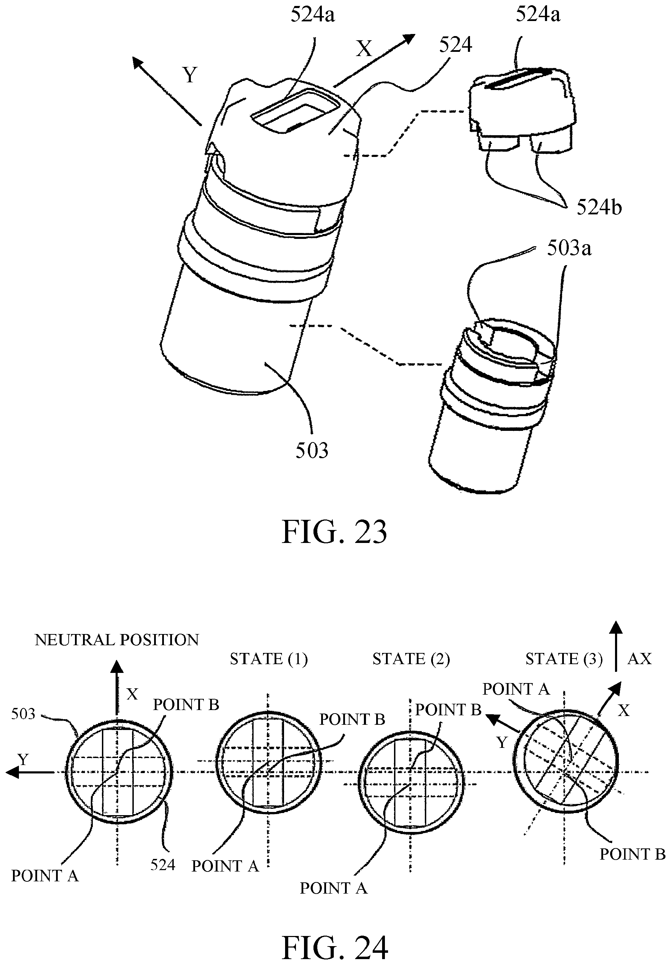

Next, with reference to FIG. 23, a detailed description is given of a relation between the decentering-rotating member 503 and the connecting member 524. FIG. 23 is a perspective view of a state where the decentering-rotating member 503 and the connecting member 524 are connected. As described above, the connecting member 524 includes the second guide portion 524a which is a groove engaged with the first guide portion 526a provided on the adjusting pin 526 of the second focus adjusting unit 500. This groove is configured as the long groove extended in an X direction in FIG. 23 so that the engaged first guide portion 526a is movably supported in the X direction. On the other hand, the third guide portion 524b is formed as key portions each of which is located on the side opposite to the second guide portion 524a in the shaft direction of the adjusting pin 526, and extends in a Y direction in FIG. 23 that is substantially orthogonal to the X direction and intersects the X direction. As a result, the connecting member 524 are held so that the connecting member can be freely moved in the Y direction with respect to the decentering-rotating member 503 and in the X direction with respect to the adjusting pin 526.

Next, with reference to FIG. 24, a detailed description is given of motions when the first focus adjusting unit 400 and/or the second focus adjusting unit 500 is rotated. FIG. 24 is a diagram illustrating a positional relation between the decentering-rotating member 503 and the connecting member 524 in each state when the first focus adjusting unit 400 and/or the second focus adjusting unit 500 is operated. Each circle drawn by a thick line in FIG. 24 schematically represents the decentering-rotating member 503. Each circle drawn by a thin line schematically represents the connecting member 524, each thin line schematically represents the second guide portion 524a provided on the connecting member 524, and each dotted thin line schematically represents the third guide portion 524b provided on the connecting member 524.

The decentering-rotating member 503 is held by the lens top base 300 as described above. Therefore, by operating the first focus adjusting unit 400, the lens top base 300 is moved in the direction orthogonal to the image sensor 111, and the decentering-rotating member 503 attached to the lens top base 300 is also moved integrally. Here, an arrow AX in FIG. 24 represents the direction orthogonal to the image sensor 111. As in the state (1) and the state (2), when the lens top base 300 is driven by the first focus adjusting unit 400 in the direction of the arrow AX, the decentering-rotating member 503 is also moved together with that motion in the direction of arrow AX.

The decentering-rotating member 503 and the connecting member 524 are engaged in a key-long groove relationship at the third guide portion 524b and the fourth guide portion 503a, which limits the above-described motion in the X direction. Therefore, when the decentering-rotating member 503 is driven in the direction of the arrow AX by the first focus adjusting unit 400 as described above, the connecting member 524 also moves in the direction of the arrow AX accordingly. A point A represents a rotation center point of the decentering-rotating member 503 and a point B represents a rotation center of the adjusting pin 526 engaged with the connecting member 524. The points A and B are located on the same position in a neutral position.

On the other hand, in the state (1) and the state (2), since the point B is the rotation center of the adjusting pin 526, the point B is always located at the same position, but the point A moves in the direction of the arrow AX together with the driving of the first focus adjusting unit 400. The second guide portion 524a provided on the connecting member 524 is the groove extending in the X direction described above, and the first guide portion 526a provided on the adjusting pin 526 has a key shape that engages with the second guide portion 524a. Therefore, the connecting member 524 has a degree of freedom in the X direction in FIG. 24 with respect to the adjusting pin 526 rotatably fixed to the exterior cover member 203, but the motion of the connecting member 524 is limited in the Y direction. Therefore, points A and B are located on an axis in the X direction.

On the other hand, in a state where the adjusting pin 526 is rotated from the neutral position and the first focus adjusting unit 400 is driven as in the state (3), driving of the first focus adjusting unit 400 moves the decentering-rotating member 503 in the X direction, and therefore the connecting member 524 is driven in the X direction. On the other hand, the point B, which is the rotation center of the adjusting pin 526, is always located at the same position, and the first guide portion 526a provided on the adjusting pin 526 engages with the third guide portion 524b of the connecting member 524. Therefore, the point B needs to be located on the axis in the X direction, which is a center line of the third guide portion 524b. Since the connecting member 524 has a degree of freedom in motions in the X and Y directions, the connecting member 524 can always maintain the connecting states with the adjusting pin 526 and with the decentering-rotating member 503 even when the first focus adjusting unit 400 and/or the second focus adjusting unit 500 is operated. Therefore, the first focus adjusting unit 400 and the second focus adjusting unit 500 can be operated independently of each other.

THIRD EMBODIMENT

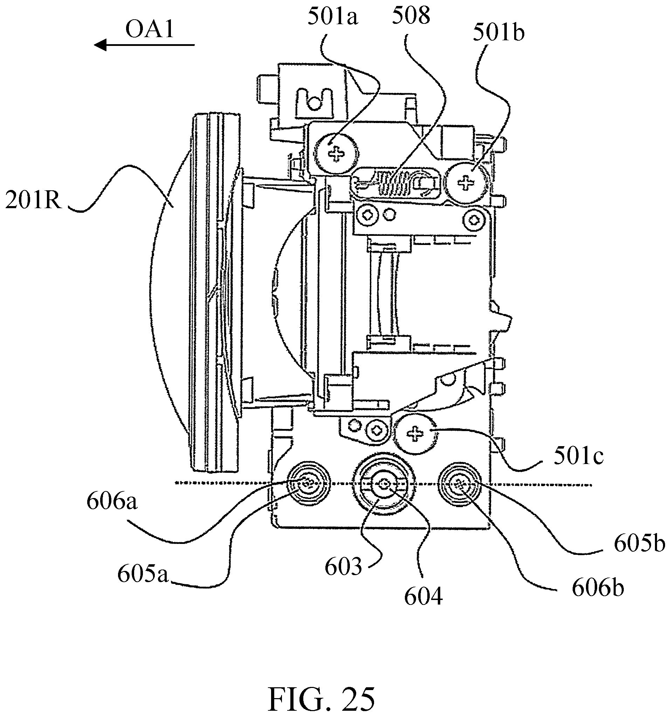

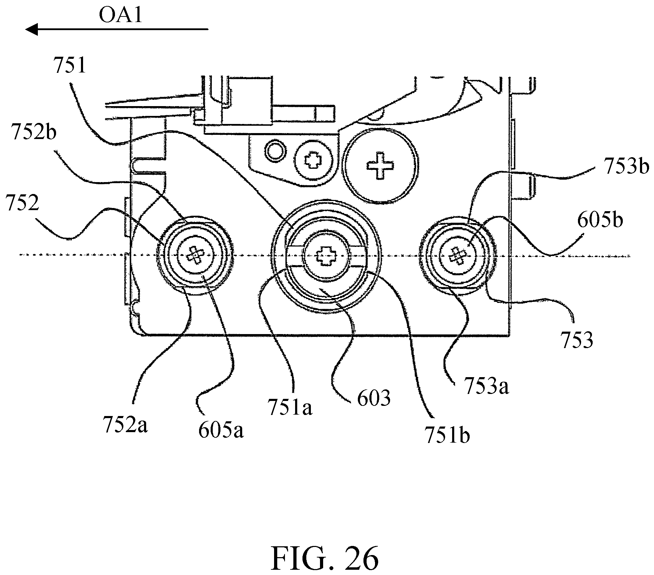

Next, a description is given of a third embodiment. This embodiment is a modification example of the right-eye (left-eye) adjusting mechanism (position adjusting mechanism) with respect to the lens top base 300 according to the second embodiment described with reference to FIGs. 17 to 19. A position adjusting mechanism of an optical system is described with reference to FIGs. 25 and 26. A basic configuration of this embodiment is the same as that of the second embodiment. Therefore, in this embodiment, the same reference numerals are used for configurations same as the configurations in the second embodiment, a duplicate description is omitted, and a detailed description is added for different configurations. FIG. 25 is a side view illustrating a configuration of a position adjusting mechanism of an optical system according to this embodiment. FIG. 26 is an enlarged view of a position adjusting unit and a guide portion of the optical system.

A decentering-rotating member 603 is rotatably attached to a lens top base 300 by a shoulder screw 604, and at the same time, an outer circumference of the decentering-rotating member 603 is fitted into a hole portion 751 of a right-eye optical system 201R. In the decentering-rotating member 603, an outer shape center is decentered from a rotation center, as in the second embodiment. Therefore, by rotating the decentering-rotating member 603, the right-eye optical system 201R can be adjusted in an optical axis direction while the right-eye optical system 201R slides on the lens top base 300 by a decentering amount of the outer shape center relative to the rotation center. When the decentering-rotating member 603 rotates, the right-eye optical system 201R is moved in the optical axis direction with respect to the lens top base 300 by the decentering-rotating member 603 coming into contact with a D-cut portion 751a of a hole portion 751. Two rolling bearings 605a and 605b are arranged parallelly to an optical axis direction so that the right-eye optical system 201R can be moved parallelly to the optical axis direction by rotating the decentering-rotating member 603. The rolling bearings 605a and 605b are rotatably attached to the lens top base 300.

The two rolling bearings 605a and 605b are simultaneously fitted into straight guide portions 752a, 752b, 753a, and 753b of guide holes 752 and 753 of the right-eye optical system 201R, and function as a straight guide portion for moving the right-eye optical system 201R in the direction parallel to the optical axis. As illustrated in FIGs. 25 and 26, the decentering-rotating member 603 is disposed on a line that is parallel to the optical axis OA1 and that connects the centers of the two rolling bearings 605a and 605b. That is, the decentering-rotating member 603 is disposed on a guide line of the rolling bearings 605a and 605b having the straight guide function, and thereby an action line of the adjustment of the decentering-rotating member 603 and the center line of the two rolling bearings 605a and 605b match. As a result, the followability of a lens unit of the right-eye optical system 201R is improved. With the configuration described above, even in a case where the adjustment unit is disposed at a position away from the optical axis, it is possible to move the right-eye optical system 201R as intended and without rattling. In this embodiment, the decentering-rotating member 603 is located on the line connecting the centers of the two rolling bearings 605a and 605b, but may be located on an extension of the line connecting the centers of the two rolling bearings 605a and 605b.

According to each embodiment, it is possible to provide a lens apparatus and an image pickup apparatus that can properly adjust focus of a plurality of optical systems with a simple operation.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A lens apparatus includes a first optical system, a second optical system, a first focus adjusting unit configured to simultaneously adjust focus of the first optical system and the second optical system, and a second focus adjusting unit configured to adjust a relative shift of focus positions of the first optical system and the second optical system. The first focus adjusting unit is connected to both the first optical system and the second optical system. The second focus adjusting unit is connected to one of the first optical system and the second optical system.

**Claims**

1.  A lens apparatus (200) comprising:

    a first optical system (201R; 201L);
    a second optical system (201L; 201R);
    a first focus adjusting unit (400) configured to simultaneously adjust focus of the first optical system (201R; 201L) and the second optical system (201L; 201R); and
    a second focus adjusting unit (500) configured to adjust a relative shift of focus positions of the first optical system (201R; 201L) and the second optical system (201L; 201R),
    **characterized in that** the first focus adjusting unit (400) is connected to both the first optical system (201R; 201L) and the second optical system (201L; 201R),
    wherein the second focus adjusting unit (500) is connected to one of the first optical system (201R; 201L) and the second optical system (201L; 201R).

2.  The lens apparatus (200) according to claim 1, wherein the first optical system (201R; 201L) and the second optical system (201L; 201R) are imaging optical systems consisting of same optical systems as each other.

3.  The lens apparatus (200) according to claim 1 or 2, wherein each of the first optical system (201R; 201L) and the second optical system (201L; 201R) can adjust the focus by extending and contracting an entire optical system.

4.  The lens apparatus (200) according to any one of claims 1 to 3, wherein one of the first focus adjusting unit (400) and the second focus adjusting unit (500) does not move in an in-focus direction during focus adjustment.

5.  The lens apparatus (200) according to any one of claims 1 to 4, further comprising a decentering-rotating member (503; 603) configured to drive one of the first optical system (201R; 201L) and the second optical system (201L; 201R) in a direction orthogonal to an image pickup plane by rotating the one of the first optical system (201R; 201L) and the second optical system (201L; 201R),
    wherein the decentering-rotating member (503; 603) is connected to the second focus adjusting unit (500).

6. The lens apparatus (200) according to claim 5, further comprising a connecting member (524) configured to connect the second focus adjusting unit (500) and the decentering-rotating member (503; 603),

    wherein the second focus adjusting unit (500) includes a first guide portion (526a),
    wherein the connecting member (524) includes:

    a second guide portion (524a) configured to engage with the first guide portion (526a); and
    a third guide portion (524b) configured to engage with the decentering-rotating member (503; 603), and

    wherein the decentering-rotating member (503; 603) includes a fourth guide portion (503a) configured to engage with the third guide portion (524b).

7. The lens apparatus (200) according to claim 6, wherein the second guide portion (524a) and the third guide portion (524b) are arranged in directions intersecting each other.

8. The lens apparatus (200) according to any one of claims 5 to 7, further comprising an elastic member (522) disposed between the second focus adjusting unit (500) and the decentering-rotating member (503; 603).

9. A lens apparatus (200) comprising:

    a first optical system (201R; 201L);
    a second optical system (201L; 201R); and
    a holding member (300) configured to hold the first optical system (201R; 201L) and the second optical system (201L; 201R),
    **characterized in that** each of the first optical system (201R; 201L) and the second optical system (201L; 201R) is a bending optical system including a first reflective surface (220) and a second reflective surface (230), and includes, in order from an object side to an image side:

    a first optical axis (OA1R, OA1L);
    a second optical axis (OA2R, OA2L) of light reflected by the first reflective surface (220); and
    a third optical axis (OA3R, OA3L) of light reflected by the second reflective surface (230),

    wherein a line connecting the first optical axis (OA1R, OA1L) of the first optical system (201R; 201L) and the first optical axis (OA1R, OA1L) of the second optical system (201L; 201R) orthogonally intersects each of (i) a first connecting surface (312R) on which the first optical system (201R; 201L) is connected to the holding member (300) and (ii) a second connecting surface (312L) on which the second optical system (201L; 201R) is connected to the holding member (300).

10. The lens apparatus (200) according to claim 9, wherein each of the first connecting surface (312R) and the second connecting surface (312L) is parallel to the first optical axis (OA1R, OA1L) and the third optical axis (OA3R, OA3L).

11. The lens apparatus (200) according to claim 9 or 10, wherein each of the first connecting surface (312R) and the second connecting surface (312L) is orthogonal to the second optical axis (OA2R, OA2L).

12. The lens apparatus (200) according to any one of claims 9 to 11, wherein each of the first connecting surface (312R) and the second connecting surface (312L) is located between the first optical axis (OA1R, OA1L) and the third optical axis (OA3R, OA3L).

13. The lens apparatus (200) according to any one of claims 9 to 12, further comprising a circuit board (310) disposed between the first connecting surface (312R) and the second connecting surface (312L).

14. A lens apparatus (200) comprising:

    an optical system (201R, 201L);
    a holding member (300) configured to hold the optical system (201R, 201L);
    a position adjusting unit (503) configured to adjust the optical system (201R, 201L) movably with respect to the holding member (300);
    a guide portion (505a, 505b) configured to guide the optical system (201R, 201L) in an adjustment direction;

a first biasing member (502a-502c) configured to bias the optical system (201R, 201L) against the holding member (300); and

a second biasing member (508) disposed on an opposite side to the position adjusting unit (503) across an optical axis of the optical system (201R, 201L) and configured to bias the optical system (201R, 201L) simultaneously in (i) the adjustment direction and (ii) a direction orthogonally intersecting the adjustment direction on a same plane as a plane of the adjustment direction.

15. The lens apparatus (200) according to claim 14, wherein the optical system (201R, 201L) is attached to the holding member (300) slidably in the adjustment direction.

16. The lens apparatus (200) according to claim 14 or 15, wherein the position adjusting unit (503) is a decentering-rotating member (503; 603), and

wherein the decentering-rotating member (503; 603) is configured to adjust the optical system (201R, 201L) in the adjustment direction by rotating.

17. The lens apparatus (200) according to any one of claims 14 to 17, wherein the guide portion (505a, 505b) is at least two bearings.

18. The lens apparatus (200) according to claim 17, wherein the position adjusting unit (503) is disposed on a line connecting centers of the two bearings.

19. The lens apparatus (200) according to claim 17, wherein the position adjusting unit (503) is located on an extension of a line connecting the centers of the two bearings.

20. The lens apparatus (200) according to any one of claims 14 to 19, wherein following conditional expressions are satisfied:

$$\mu N + mg < k2x2$$

$$N = k1x1$$

where $\mu$ represents a static friction coefficient between the optical system (201R, 201L) and the holding member (300), N represents a vertical resistance force occurring between the optical system (201R, 201L) and the holding member (300), k1 represents a spring constant of the first biasing member (502a-502c), x1 represents a displacement amount of the first biasing member (502a-502c), k2 represents a spring constant of the second biasing member (508), and x2 represents a displacement amount of the second biasing member (508).

21. The lens apparatus (200) according to any one of claims 14 to 19, further comprising a third biasing member (507) configured to bias the optical system (201R, 201L) in the adjustment direction.

22. The lens apparatus (200) according to claim 21, wherein following conditional expressions are satisfied:

$$\mu N + mg < k2x2 + k3x3$$

$$N = k1x1$$

where $\mu$ represents a static friction coefficient between the optical system (201R, 201L) and the holding member (300), N represents a vertical resistance force occurring between the optical system (201R, 201L) and the holding member (300), k1 represents a spring constant of the first biasing member (502a-502c), xl represents a displacement amount of the first biasing member (502a-502c), k2 represents a spring constant of the second biasing member (508), x2 represents a displacement amount of the second biasing member (508), k3 represents a spring constant of the third biasing member (507), and x3 represents a displacement amount of the third biasing member (507).

23. The lens apparatus (200) according to any one of claims 14 to 22, wherein the optical system (201R, 201L) includes a first optical system (201R; 201L) and a second optical system (201L; 201R).

24. The lens apparatus (200) according to claim 23, wherein each of the first optical system (201R; 201L) and the second optical system (201L; 201R) is attached to the holding member (300) and is movable relatively to each other.

25. The lens apparatus (200) according to claim 23 or 24, wherein the first optical system (201R; 201L) and the second optical system (201L; 201R) are imaging optical systems consisting of same optical systems as each other.

26. The lens apparatus (200) according to any one of claims 14 to 25, wherein the optical system (201R, 201L) can adjust focus by extending and contracting an entire optical system.

27. The lens apparatus (200) according to any one of claims 14 to 26, wherein the adjustment direction is a direction orthogonal to an image sensor.

28. An image pickup apparatus (100) comprising:

an image sensor (111); and
the lens apparatus (200) according to any one of claims 1 to 27.

FIG. 1

FIG. 2

FIG. 3

20R ⟸ ⟹ 20L                    200

204C    204A         204B 204D              204

                                            203

211C

204F

213A

213

201R
211R(A,B)    204C    204A    204D    204B

204C

O

211C

204F

213A

213

201L
211L(A,B)

FIG. 4

FIG. 5

203

204

204B

204F

215

204D

213

211D

X

213A

211C

211A(B)

211L

201L

OA1L

ΦA

ΦB

213B

212A

213D

212B

212

214

Y

FIG. 6

FIG. 7

FIG. 8

FIG. 9

FIG. 10

FIG. 11

FIG. 12

FIG. 13

302b     400

300

301

301a

302

303

## FIG. 14

311L    312L      312R

201L            201R

OA1      312L     310     300     312R     311R

## FIG. 15

FIG. 16

FIG. 17

FIG. 18

FIG. 19

201L  300  mg 201R

$\mu N$

$N$

$3 \times (k1x1)$

$k2x2 + k3x3$

## FIG. 20A

503  201R

300

507  501a

$k3x3$  508

$k2x2$

501c  505a  505b  501b

## FIG. 20B

FIG. 21

FIG. 22

524a

X

Y

524

524a

524b

503a

503

FIG. 23

NEUTRAL POSITION

STATE (1)

STATE (2)

STATE (3)

AX

X

503

POINT B

POINT B

POINT B

POINT A

X

Y

Y

POINT A

524 POINT A

POINT A

POINT B

FIG. 24

FIG. 25

FIG. 26

**REFERENCES CITED IN THE DESCRIPTION**

**Patent documents cited in the description**

- JP 2012003022 S
- JP 2012113281 S
- JP 2009175498 A